# DEMANDE DE BREVET EUROPEEN

(11) **EP 3 078 516 A1**
(43) Date de publication de la demande: **12.10.2016**
(21) Numéro de dépôt: 16159102.9
(22) Date de dépôt: 08.03.2016
(51) Int. Cl.: B60G 7/04, B60G 11/58, B60G 17/019, B60T 8/18

(54) **SYSTEME DE BUTEE D'ATTAQUE POUR LA SUSPENSION D'UN VEHICULE MESURANT LA CHARGE DE CE VEHICULE**

(30) Priorité: 07.04.2015 FR 1552962
(71) Demandeur: Peugeot Citroën Automobiles SA, 78140 Vélizy-Villacoublay (FR)
(72) Inventeur: MONTEIL, CHRISTOPHE, 60530 LE MESNIL EN THELLE (FR)

(57) **Abrégé**

Système de butée d'attaque pour la suspension d'un véhicule automobile, la butée comprenant un bloc en élastomère présentant une chambre supérieure fermée (10) comportant une raideur destinée à freiner la fin de course d'un appui de la caisse du véhicule, cette chambre étant reliée à un moyen de mesure de la pression intérieure, ce système comportant une embase (6) formant une deuxième chambre en communication avec la chambre supérieure (10), qui est disposée en dessous de l'appui du ressort de suspension (2) afin d'être comprimée par la charge de ce ressort.

## Description

La présente invention concerne une butée d'attaque d'une suspension d'un véhicule automobile, donnant une indication de la charge de ce véhicule, ainsi qu'un véhicule automobile équipé de telles butées d'attaque.

Les véhicules automobiles comportent généralement pour chaque roue une suspension comprenant un ressort de suspension, un amortisseur qui freine les mouvements de la suspension, et une butée d'attaque sur laquelle la caisse vient appuyer quand elle arrive en fin de course, afin de ralentir cette course puis l'arrêter.

Par ailleurs certains véhicules, en particulier les véhicules utilitaires, peuvent comporter un système d'estimation de la charge totale permettant en particulier de vérifier si la charge ne dépasse pas la masse totale en charge autorisée, afin de respecter cette charge et d'assurer la sécurité.

La réglementation pourrait bientôt imposer la présence d'un tel système sur certains véhicules utilitaires.

Il est connu d'adapter sur un véhicule de ce type des capteurs de débattement qui mesurent le débattement des suspensions, afin d'en déduire en connaissant les courbes de raideur de ces suspension la charge appliquée sur le véhicule. Ce système de mesure peut être produit sous forme d'un kit adaptable en après-vente sur le véhicule, comprenant les capteurs et le câblage pour les relier à un boîtier de contrôle électronique délivrant des informations sur le niveau de charge.

Toutefois ce type de système de mesure pose généralement des problèmes de précision et de fiabilité. En effet de nombreux paramètres perturbent cette mesure de la charge, comprenant notamment les dispersions de fabrication de tous les composants de la suspension, les variations d'assiette du véhicule, les frottements dans la cinématique des suspensions, en particulier des amortisseurs et des liaisons élastique, et le fluage de certains composants, notamment les butées en polyuréthane, venant d'une pression importante s'appliquant de manière prolongée sur ces butée.

Ces incertitudes sont amplifiées par la loi de déplacement vertical ramené à la roue en fonction de la charge sur la suspension, qui présente en général une raideur modérée au début, puis une raideur croissante se terminant par une partie proche de la verticale en fin de course, afin d'arrêter cette course par la butée d'attaque.

On a alors compte tenu de toutes les dispersions présentées ci-dessus, en fin de débattement de la suspension un déplacement trop faible pour une variation de charge importante qui ne permet pas d'obtenir une précision inférieure à environ 50kg par suspension.

Un autre système de mesure de la charge connu, présenté notamment par le document JP-9236498, comporte un capteur de charge placé sur un appui d'un ressort hélicoïdal de suspension, qui permet de mesurer la charge réelle appliquée sur cette suspension. On peut ainsi évaluer la charge totale du véhicule. Toutefois, ce système comprenant un capteur de charge présente un coût élevé.

Un autre type de système de mesure de la charge connu, présenté notamment par le document FR-A1-3000701, comporte une butée d'attaque formée par un bloc en élastomère contenant une cavité fermée, et un moyen de mesure de la pression dans cette cavité.

On obtient ainsi une évaluation de la charge appliquée sur la butée d'attaque par la montée en pression de l'air enfermé dans la cavité, quand cette butée est écrasée pour arrêter la fin de course. Toutefois ce système pose un problème car il ne prend pas en compte la charge sur le ressort de suspension disposé en parallèle de la butée.

Avec un ressort de suspension présentant une charge linéaire on peut obtenir au moyen d'un capteur de déplacement additionnel une estimation assez précise de la charge sur ce ressort en ajoutant le coût de ce dispositif. Mais dans le cas d'un ressort présentant une charge non linéaire, couramment utilisé aujourd'hui, la précision reste faible. De plus dans ce dernier cas on atteint généralement la butée d'attaque au-delà de la charge maximum autorisée, l'effort reçu par la butée ne permet pas de détecter le début de cette charge maximum.

La présente invention a notamment pour but d'éviter ces inconvénients de la technique antérieure, en proposant un moyen simple et efficace permettant d'estimer la charge d'un véhicule.

Elle propose à cet effet un système de butée d'attaque pour la suspension d'un véhicule automobile, la buté prévue pour être entourée d'un ressort hélicoïdal de suspension, comprenant un bloc en élastomère présentant une chambre supérieure fermée comportant une raideur destinée à freiner la fin de course d'un appui de la caisse du véhicule, cette chambre étant reliée à un moyen de mesure de la pression intérieure, remarquable en ce qu'il comporte une embase formant une deuxième chambre en communication avec la chambre supérieure, qui est disposée en dessous de l'appui du ressort de suspension afin d'être comprimée par la charge de ce ressort.

Un avantage du système de butée d'attaque selon l'invention est que grâce à la mesure de la pression dans les deux cavités, et à partir de lois donnant la charge en fonction de la pression, on obtient de manière simple sans capteur de déplacement comprenant des frottements, une mesure précise de la masse du véhicule s'appliquant à la fois sur les deux éléments transmettant cette charge, le ressort et la butée d'attaque.

Le système de butée d'attaque selon l'invention peut de plus comporter une ou plusieurs des caractéristiques suivantes, qui peuvent être combinées entre elles.

Avantageusement, la butée comporte une tôle d'appui insérée entre la base du ressort et l'embase.

Dans ce cas avantageusement la base de la chambre supérieure est en appui sur la tôle d'appui.

Avantageusement la tôle d'appui comporte un moyen de centrage de la base de la chambre supérieure.

Le moyen de centrage peut comporter un rebord intérieur circulaire de la tôle d'appui, réalisant une partie cylindrique tournée vers le haut.

Avantageusement, l'embase comporte un élément de centrage de la tôle d'appui.

Cet élément de centrage peut former une coupelle centrée à l'intérieur de l'embase, comprenant un rebord extérieur circulaire tourné vers le haut, qui est ajusté dans le rebord intérieur circulaire de la tôle d'appui.

Avantageusement, la chambre supérieure comporte à sa base une gorge circulaire extérieure recevant la première spire du ressort de suspension, pour réaliser un calage axial de ce ressort.

En particulier le moyen de mesure de la pression peut être relié à celui d'au moins un autre système de butée pour effectuer une mesure de la pression moyenne dans ces butées reliées entre elles.

L'invention a aussi pour objet un véhicule automobile comprenant des systèmes de butées d'attaque pour la suspension, comportant l'une quelconque des caractéristiques précédentes

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue en coupe axiale d'un système de butée selon l'invention, disposé sur la suspension d'un véhicule automobile ;
- la figure 2 est une vue partielle de ce système quand le véhicule n'est pas chargé ;
- la figure 3 est une vue partielle de ce système quand le véhicule est modérément chargé ; et
- la figure 4 est une vue de ce système quand le véhicule est fortement chargé.

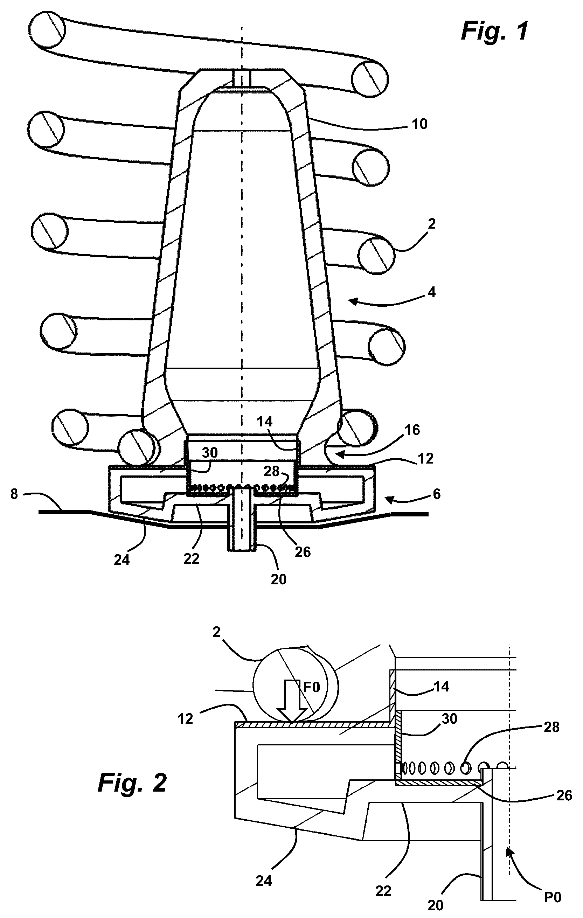

La figure 1 présente un système de butée 4 disposé suivant un axe principal présenté verticalement dans ce dessin, comprenant une chambre fermée supérieure 10 reposant sur une embase 6, par l'intermédiaire d'une tôle d'appui 12. La chambre 10 et l'embase 6 sont réalisées en élastomère, comme un polyuréthane ou un caoutchouc.

Un ressort hélicoïdal de suspension 2 comporte une extrémité supérieure soutenant la caisse du véhicule, et une extrémité inférieure en appui sur l'embase 6 de la butée d'attaque 4, qui est elle-même posée sur une surface de l'essieu du véhicule 8.

La tôle d'appui 12 comporte une partie plane horizontale formant une rondelle, comprenant au centre une forme cylindrique tournée vers le haut formant un rebord intérieur 14 réalisé par pliage de cette tôle.

La base de la chambre supérieure 10 comporte une partie plane annulaire venant en appui sur la face supérieure de la rondelle de la tôle d'appui 12, qui entoure un perçage axial recevant de manière serrée le rebord intérieur cylindrique 14, afin d'assurer un centrage ainsi qu'une étanchéité de cette chambre supérieure.

La base du ressort de suspension 2 entourant la chambre supérieure 10, prend appui sur la tôle d'appui 12 autour de cette chambre, en pénétrant radialement vers l'intérieur dans la matière élastomère grâce à une gorge annulaire extérieure 16 réalisée autour de cette chambre. La base du ressort de suspension 2 comportant une première spire resserrée horizontale formant presque un tour complet, est introduite dans cette gorge annulaire 16 par une déformation élastique de l'élastomère, ce qui assure un maintien de ce ressort.

L'embase 6 forme une chambre inférieure présentant une épaisseur de matière sensiblement constante, comportant une face supérieure annulaire couverte entièrement par la tôle d'appui 12, et un contour extérieur cylindrique ajusté sur le diamètre extérieur de cette rondelle.

La face inférieure de l'embase 6 présente en partant de l'axe, un tube vertical 20 qui descend en traversant la surface de l'essieu 8, une partie annulaire intérieure horizontale 22 formant un plateau légèrement surélevé par rapport à cette surface, et une partie annulaire extérieure sensiblement plane posée sur cette surface de l'essieu, qui comporte une forme légèrement conique remontant sur les côtés.

La partie annulaire intérieure 22 supporte au-dessus une coupelle 26 comprenant un perçage central recevant l'extrémité supérieure du tube 20, et un rebord extérieur 30 tourné vers le haut formant une partie cylindrique présentant à sa base une rangée de perçages 28.

Le rebord extérieur cylindrique 30 de la coupelle 26 est ajusté à l'intérieur du rebord intérieur 14 de la tôle d'appui 12, en permettant un coulissement axial relatif, la rangée de perçages 28 restant au-dessus de cette tôle maintenant en permanence une communication entre l'embase 6 et la chambre supérieure 10. Ce guidage de la tôle d'appui 12 permet en particulier son centrage et celui de la chambre supérieure 10, en évitant un glissement latéral lors des débattements de la suspension.

En particulier on peut réaliser la coupelle 26 en matière plastique.

Le tube vertical 20 est prolongé vers le bas par un conduit relié à un capteur de pression non représenté, qui envoie un signal à un boîtier électronique de contrôle représentant la pression dans l'ensemble des deux volumes fermés reliés entre eux, le volume supérieur 10 et l'embase 6.

La figure 2 présente le système de butée pour le véhicule à vide, exerçant une charge modérée sur la suspension. Le ressort de suspension 2 faiblement comprimé, transmet par la tôle d'appui 12 la charge F0 à l'embase 6, qui l'applique à la surface de l'essieu 8. La caisse du véhicule n'est pas en contact avec la chambre supérieure 10.

On a alors une compression minimum de l'embase 6 donnant une réduction limitée de son volume intérieur, ce qui entraîne un seuil de pression faible P0 dans le système de butée 4. Le capteur de pression et son boîtier électronique enregistre ce seuil de pression qui se présente régulièrement lorsque le véhicule est à vide, et peut l'associer à l'état du véhicule non chargé.

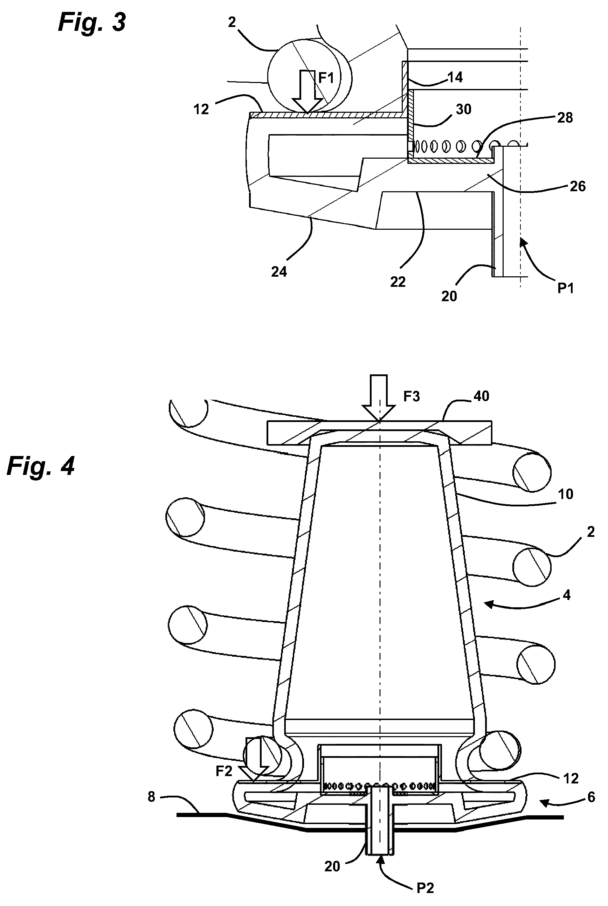

La figure 3 présente le système de butée pour le véhicule moyennement chargé, exerçant une charge plus importante F1 sur la suspension, sans atteindre la chambre supérieure 10. Le ressort de suspension 2 moyennement comprimé transmet cette charge à l'embase 6 en la déformant plus, ce qui réduit plus fortement son volume alors que le volume de la chambre supérieure 10 ne change toujours pas.

La réduction de volume de l'embase 6 entraîne une pression moyenne P1 dans le système de butée 4, qui est enregistrée par le capteur de pression et son boîtier électronique.

La figure 4 présente le système de butée pour un véhicule fortement chargé, la caisse de ce véhicule 40 venant en contact au-dessus de la chambre supérieure 10 en comprimant ce volume, afin de délivrer une force de soutien supplémentaire F3 à cette caisse s'ajoutant à celle F2 du ressort de suspension 2.

On a alors à la fois une forte réduction du volume de l'embase 6 ainsi qu'une réduction du volume de la chambre supérieure 10, qui donnent un niveau de compression élevé P2 dans le système de butée 4, enregistré par le capteur de pression et son boîtier électronique. A partir d'un seuil de pression élevé, on peut détecter en particulier une surcharge du véhicule.

Le boîtier électronique peut être relié à des moyens d'information du conducteur, comme par exemple un indicateur au tableau de bord, ou un signal sonore.

En particulier le système peut signaler seulement un dépassement du seuil de charge, en conservant en mémoire la valeur de pression correspondant à ce seuil qui a été préalablement étalonnée. En variante le système peut donner une indication précise sur le niveau de charge, si la courbe de complète de relation entre la pression et la charge a été étalonnée.

On notera que la mesure directe de la pression d'air par le capteur de pression ne comportant pas de mouvement, contrairement aux capteurs de déplacement de la suspension déjà utilisés, représentant assez fidèlement la compression de la matière élastomère, on peut obtenir une valeur précise de la force appliquée par l'ensemble de la suspension, comportant une faible hystérésis.

Un tel type de système peut donner une précision sur la charge du véhicule nettement inférieure à 50kg, ce qui sera nécessaire pour répondre à des contraintes réglementaires de surveillance de la surcharge.

## Revendications

1. - Système de butée d'attaque pour la suspension d'un véhicule automobile, la butée prévue pour être entourée par un ressort hélicoïdal de suspension (2), comprenant un bloc en élastomère présentant une chambre supérieure fermée (10) comportant une raideur destinée à freiner la fin de course d'un appui de la caisse du véhicule (40), cette chambre étant reliée à un moyen de mesure de la pression intérieure, **caractérisé en ce qu'**il comporte une embase (6) formant une deuxième chambre en communication avec la chambre supérieure (10), qui est disposée en dessous de l'appui du ressort de suspension (2) afin d'être comprimée par la charge de ce ressort.

2. - Système de butée d'attaque selon la revendication 1, **caractérisé en ce que** la butée comporte une tôle d'appui (12) insérée entre la base du ressort (2) et l'embase (6).

3. - Système de butée d'attaque selon la revendication 2, **caractérisé en ce que** la base de la chambre supérieure (10) est en appui sur la tôle d'appui (12).

4. - Système de butée d'attaque selon la revendication 3, **caractérisé en ce que** la tôle d'appui (12) comporte un moyen de centrage (14) de la base de la chambre supérieure (10).

5. - Système de butée selon la revendication 4, **caractérisé en ce que** le moyen de centrage comporte un rebord intérieur circulaire (14) de la tôle d'appui (12), réalisant une partie cylindrique tournée vers le haut.

6. - Système de butée d'attaque selon l'une quelconque des revendications 2 à 5, **caractérisé en ce que** l'embase (6) comporte un élément de centrage (26) de la tôle d'appui (12).

7. - Système de butée d'attaque selon les revendications 5 et 6, **caractérisé en ce que** l'élément de centrage forme une coupelle (26) centrée à l'intérieur de l'embase (6), comprenant un rebord extérieur circulaire tourné vers le haut (30), qui est ajusté dans le rebord intérieur circulaire (14) de la tôle d'appui (12).

8. - Système de butée d'attaque selon l'une quelconque des revendications précédentes, **caractérisé en ce que** la chambre supérieure (10) comporte à sa base une gorge circulaire extérieure (16) recevant la première spire du ressort de suspension (2), pour réaliser un calage axial de ce ressort.

9. - Système de butée d'attaque selon l'une quelconque des revendications précédentes, **caractérisé en ce que** le moyen de mesure de la pression est relié à celui d'au moins un autre système de butée pour effectuer une mesure de la pression moyenne dans ces butées reliées entre elles.

10. - Véhicule automobile comprenant des systèmes de butées d'attaque pour la suspension, **caractérisé en ce que** ces systèmes de butée sont réalisés selon l'une quelconque des revendications précédentes.
